# EUROPEAN PATENT SPECIFICATION

(11) **EP 0 488 284 B1**
(45) Date of publication and mention of the grant of the patent: **25.01.1995**
(21) Application number: 91120397.4
(22) Date of filing: 28.11.1991
(51) Int. Cl.: G01J 5/02, G01K 11/20, G01J 5/04

(54) **Radiation thermometer**
Strahlungspyrometer
Thermomètre à radiation

(30) Priority: 29.11.1990 JP 333566/90
(43) Date of publication of application: 03.06.1992
(73) Proprietor: HORIBA, LTD., Minami-ku Kyoto (JP); TASCO JAPAN CO., LTD., Nishi-ku, Osaka (JP)
(72) Inventor: Mino, Kazuo, Kitakatsuragi-gun, Nara-prefecture (JP); Nomura, Toshiyuki, Kyoto-city, Kyoto 610-11 (JP); Tsujioka, Yuiji, Hamming Nishiura 302 Go shitsu, Kyoto (JP)
(74) Representative: TER MEER STEINMEISTER & PARTNER GbR

(56) References cited:
- EP-A- 0 201 790
- WO-A-87/02769
- PATENT ABSTRACTS OF JAPAN vol. 15, no. 205 (P-1206) 27 May 1991 & JP-A-3054424

## Description

### Background of the Invention

### Field of the Invention

The present invention relates to a radiation thermometer as claimed in the preamble of claim 1, used for measuring the temperature of an object, such as highly glossy metals, exhibiting a low infrared emissivity.

### Description of the Prior Art

For example, in case where the temperature of a product-molding surface of a synthetic resin-molding metal mold, which surface has been subjected to the polishing treatment, and various kinds of glossy metals is to be measured, there is a fear that a contact-type thermometer using a thermo-couple injures the glossy metallic surface, so that in general a noncontact-type radiation thermometer has been used. In this case, however, since the object to be measured is a glossy metal exhibiting a low emissivity, a black tape or a black paint have been applied to its surface in order to indirectly measure the temperature of said object on the basis of a radiation dosage and an emissivity of infrared rays from said black tape or black paint brought into thermal equilibrium with the object.

In the above described case, however, not only the troublesome operation of sticking the tape or applying the paint has been required but it was also troublesome to separate the tape or the paint after the measurement without injuring the glossy metallic surface.

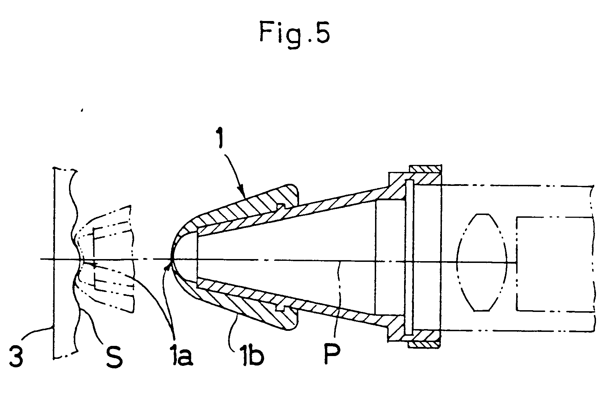

In order to solve such a disadvantage, a radiation thermometer as shown in Fig. 5 has been provided at a pointed end thereof with an infrared radiation member 1 made of an elastic material, such as silicon rubber, and having a sectional shape convex toward the side of an object 3 to be measured, a thin film portion 1a crossing an optical axis P, and a thick-walled circumferential portion 1b. In this way it is possible to press the thin film portion 1a against a surface S of said object 3 by an elastic stability of said thick-walled circumferential portion 1b of said infrared radiation member 1 in order to measure the temperature of the object 3 on the basis of a radiation dosage of infrared rays from the thin film portion 1a and an emissivity of the infrared radiation member 1. Such a thermometer is disclosed in JP-A- 3 054 424, published 08.03.1991.

Of course, according to this method it is not necessary to apply or to remove a black tape or a black paint to or from the surface of the object to be measured. In addition, a more effective radiation thermometer can be obtained having a reduced diameter of the minimum measurable spot (a narrow filed of view of an infrared detector).

However, since the thin film portion 1a is pressed against said surface S of the object 3 by the elastic stability of said thick-walled circumferential portion 1b of the infrared radiation member 1, and area of the thin film portion 1a pressed against the surface of the object 3 is increased which leads to an imperfect adhesion between the thin film portion 1a and the object 3 and thus a problem has occurred in that it is difficult to obtain a good re-productivity.

WO-A- 8 702 769 discloses a radiation thermometer according to the preamble of claim 1. In this document a thermometer having a luminescent material layer on a convex shaped elastomeric material is described.

### Summary of the Invention

The present invention has been achieved paying attention to the above described points and it is an object of the present invention to provide a radiation thermometer capable of surely sticking a thin film portion to a surface of an object to be measured and thus measuring a temperature of said object with high accuracy even though the minimum measurable spot is large.

In order to achieve the above described object, the invention is characterized in that the infrared radiation member comprises
- at least a thin film portion crossing an optical axis of the optical system, and in that
- an air tight room is formed by said elastic member and the body of the thermometer such that an internal pressure within said air tight room is higher than a pressure of the open air.

A further embodiment of the invention is characterized by a pressurizing chamber having an air intake for generating an internal pressure within said air tight room which may be higher than a pressure of the open air, said pressurizing chamber is connected with a circumferential portion of said infrared radiation member.

According to a construction of a first embodiment of the thermometer, the air tight room is formed within the infrared radiation member and said internal pressure within the air tight room is higher than said pressure of the open air, so that the thin film portion can be surely adhered to the surface of the object to be measured by the internal pressure when the thin film portion is pressed against the surface of the object to be measured even though an area of the thin film portion of the infrared radiation member is large and thus the superior contact condition can be obtained.

According to a construction of a second embodiment, an air is sent in the air tight room from said pressurizing chamber by pressing the pressurizing chamber under the condition that said air intake is closed to return to the condition that said internal pressure within the air tight room is higher than said pressure of the open air even though air is leaked from the air tight room due to the repeated use of said radiation thermometer and the like and thus the internal pressure is lowered.

### Brief Description of the Drawings

Fig. 1 is a rough longitudinally sectioned side view showing a radiation thermometer according to a first preferred embodiment of the invention;
Fig. 2 is a longitudinally sectioned side view showing principal parts of a radiation thermometer according to a second preferred embodiment of the invention;
Fig. 3 is a longitudinally sectioned front view showing said principal parts shown in Fig. 2;
Fig. 4(A), (B) is an operation diagram; and
Fig. 5 is a diagram showing a conventional radiation thermometer.

### Detailed Description of the Preferred Embodiments

The preferred embodiments of the present invention will be below described with reference to the drawings.

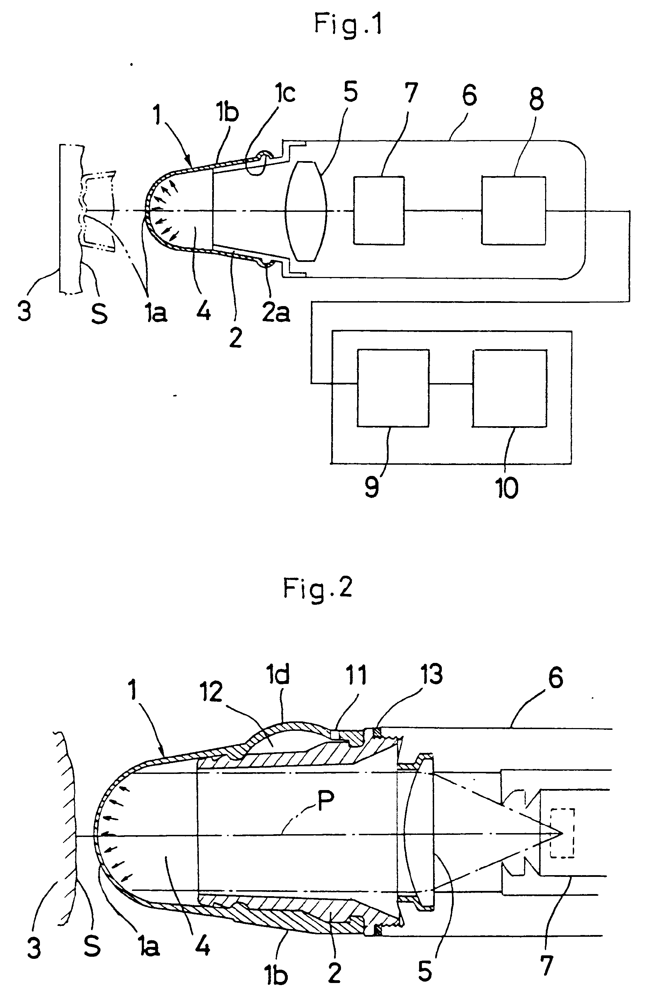

Referring to Fig. 1, reference numeral 1 designates an infrared radiation member mounted on a hood 2 disposed at a pointed end of a radiation thermometer. Said infrared radiation member 1 is made of a heat-resisting elastic material, such as silicon rubber, and has a sectional shape convex toward the side of an object 3 to be measured and at least a portion crossing an optical axis P and formed of a thin film 1a. An inside diameter of a circumferential portion 1b of the infrared radiation member 1 is set so as to be slightly smaller than an outside diameter of said hood 2 and said circumferential portion 1b is elastically engaged with the hood 2 by pressedly engaging it with the hood 2 against an elastic stability thereof to form an air tight room 4 therewithin. Further, a volume of said airtight room 4 is reduced by gradually engaging the circumferential portion 1b with the hood 2 against said elastic stability in the above described manner to make the internal pressure higher than a pressure of the open air. Reference numeral 2a designates a circular projection formed on an outer circumferential surface of the hood 2. Said circular projection 2a is engaged with a circular concave portion 1c of the circumferential portion 1b of the infrared radiation member 1 in order to prevent the infrared radiation member 1 from sliding off and to assure the air tightness of the air tight room 4. Reference numeral 5 designates a collecting lens included in a body 6 of the radiation thermometer, reference numeral 7 designates an infrared detector, reference numeral 8 designates an amplifier for amplifying an electric measuring signal supplied from said infrared detector 7, reference numeral 9 designates an operator for calculating a temperature of said object 3 to be measured on the basis of the amplified measuring signal and an emissivity of the infrared radiation member 1, and reference numeral 10 designates a display for displaying the calculated temperature.

According to the above described construction, since an internal pressure within the air tight room 4 is higher than the pressure of the open air, said thin film 1a can be surely adhered to a surface S of the object 3 to be measured over a wide range and thus a thermal equilibrium condition can be speedily brought about by pressing the thin film 1a of the infrared radiation member 1 against said surface S of the object 3 to be measured, as shown by an imaginary line in Fig. 1, even in the case where the minimum measurable spot is set so as to be large.

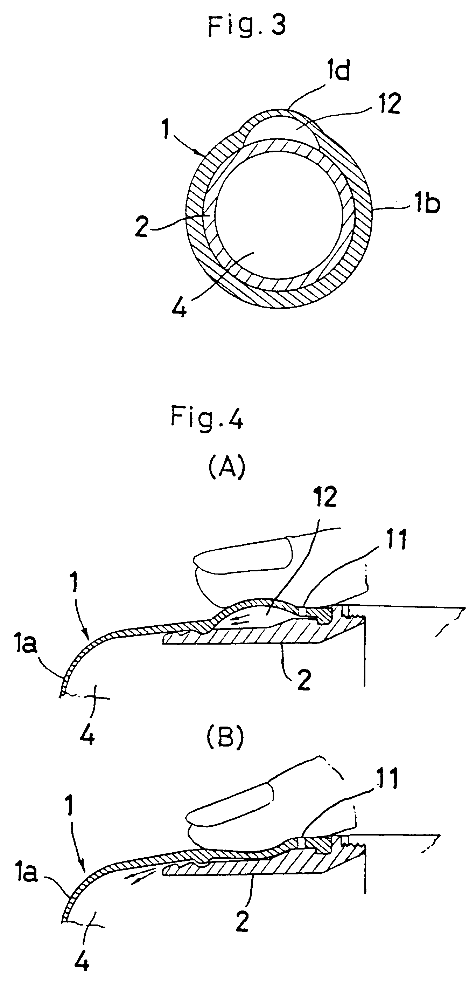

Figs. 2, 3 show an example of a radiation thermometer according to a second embodiment. This radiation thermometer is characterized in that an infrared radiation member 1 is provided with a pressurizing chamber 12 having an air intake 11 and positioned at the circumferential portion 1b of said member 1. Said chamber 12 is used for generating within an air tight room 4 an internal pressure which is higher than a pressure of the open air. Referring to the drawings, reference numeral 13 designates an air tight packing disposed between a hood 2 and a body 6. In order to provide said circumferential portion 1b with said pressurizing chamber 12, for example the circumferential portion 1b may be thick-walled and a part of the thick-walled portion may be hollowed. However, in the preferred embodiment shown in the drawings the circumferential portion 1b is thick-walled and provided with a thin-walled swollen portion 1d swollen out from a part thereof and said thin-walled swollen portion 1d is provided with said air intake 11 opened therein to form the pressurizing chamber 12 between the thin-walled swollen portion 1d and said hood 2. Other constructions are same as in the preferred embodiment of the first invention, so that their description is omitted.

According to this construction, upon smashing the pressurizing chamber 12 under the condition that the air intake 11 is closed by a finger, as shown in Figs. 4(A), (B), the air is sent in said air tight room 4 from the pressurizing chamber 12 through between the circumferential portion 1b and the hood 2 in order to make the internal pressure within the air tight room 4 higher than the pressure of the open air. By pressing down the upper wall 1d of the pressurizing chamber 12 the circumferential portion 1b between the pressurizing chamber 12 and the tip of the hood 2 is raised so that a gap is obtained through which the air flows into the air tight room 4.

Accordingly, a thin film 1a can be surely adhered to a surface S of an object 3 to be measured over a wide range in the same manner as in the first embodiment by pressing said thin film 1a of said infrared radiation member 1 against said surface S of said object 3 to be measured even in the case where the minimum measurable spot is set so as to be large.

In addition, in case where the air is leaked from the air tight room 4 due to the repeated use of the radiation thermometer and the like, the internal pressure can be easily and speedily returned to the original high level by conducting the similar operation.

The present invention can exhibit the following effects on account of the above described constructions:
According to the first embodiment, since the air tight room is formed within the infrared radiation member and the internal pressure within the air tight room is higher than the pressure of the open air, the thin film portion can be surely adhered to the surface of the object to be measured by pressing the thin film portion against the surface of the object to be measured and thus a superior conact condition can be achieved even in the case where the area of the thin film portion of the infrared radiation member is increased and the minimum measurable spot is large.

According to the second embodiment, in addition to the above described effect, the internal pressure within the air tight room can be easily and speedily returned to the condition that it is higher than the pressure of the open air by pressing the pressurizing chamber under the condition that the air intake is closed in case the air is leaked from the air tight room due to the repeated use of the radiation thermometer.

## Claims

1. A radiation thermometer, comprising
- a body (6) in which a radiation detecting means (7) and an optical system (5) are mounted, and
- an elastic infrared radiation member (1) at a pointed end of the body (6), which has a sectional shape convex toward the side of an object (3) to be measured **characterized in** that the infrared radiation member comprises at least a thin film portion (1a) crossing an optical axis (P) of the optical system (5) and in that
- an air tight room (4) is formed by said elastic member (1) and the thermometer such that an internal pressure within said air tight room (4) is higher than a pressure of the open air.

2. The radiation thermometer as claimed in claim 1, **characterized by** a pressurizing chamber (12) having an air intake (11) for generating an internal pressure within said air tight room (4) which may be higher than a pressure of the open air, said pressurizing chamber (12) is connected with a circumferential portion (1d) of said infrared radiation member (1).

3. The radiation thermometer as claimed in claim 2, **characterized in** that the pressurizing chamber (12) is provided by a cavity on the inner side of a thick-walled circumferential portion (1b).

4. The radiation thermometer as claimed in claim 2, **characterized in** that the pressurizing chamber (12) is provided by a thin-walled swollen portion (1d) of a thick-walled circumferential portion (1b).

5. The radiation thermometer as claimed in claim 3 or 4, **characterized in** that the circumferential portion (1b) is elastically mounted on a hood (2).

6. The radiation thermometer as claimed in claim 5, **characterized in** that the cross section and the elasticity of the circumferential portion (1b) are determined such that a gap from the pressurizing chamber (12) to the air tight room (4) is established between the circumferential portion (1b) and the hood (2) when pressing down an outer wall of the pressurizing chamber (12) while keeping the air intake (11) closed.

7. The radiation thermometer as claimed in claim 5 or 6, **characterized in** that sealing means (13) are provided between the hood (2) and the body (6) of the thermometer.

## Patentansprüche

1. Strahlungsthermometer mit
- einem Körper (6). in welchem sich eine Strahlungsdetektoreinrichtung (7) und ein optisches System (7) befinden, und
- einem elastischen Infrarot-Strahlungselement (1) an einem Ende des Körpers (6), das sich im Schnitt gesehen konvex in Richtung zur Seite eines zu messenden Objekts (3) erstreckt, **dadurch gekennzeichnet**, daß
- das Infrarot-Strahlungselement (1) wenigstens einen Dünnfilmbereich (1a) aufweist, der die optische Achse (P) des optischen Systems (5) schneidet, und
- ein luftdichter Raum (4) durch das elastische Element (1) und das Thermometer gebildet ist, derart, daß ein interner Druck innerhalb des luftdichten Raums (4) größer ist als der Außenluftdruck.

2. Strahlungsthermometer nach Anspruch 1, **gekennzeichnet durch** eine Druckkammer (12) mit einem Lufteinlaß (11) zur Erzeugung eines internen Drucks innerhalb des luftdichten Raums (4), der größer ist als der Außenluftdruck, wobei die Druckkammer (12) mit einem Umfangsabschnitt (1d) des Infrarot-Strahlungselements (1) verbunden ist.

3. Strahlungsthermometer nach Anspruch 2, **dadurch gekennzeichnet**, daß die Druckkammer (12) durch einen Hohlraum an der Innenseite eines dickwandigen Umfangsabschnitts (1b) gebildet ist.

4. Strahlungsthermometer nach Anspruch 2, **dadurch gekennzeichnet**, daß die Druckkammer (12) durch einen dünnwandigen und hervorstehenden Bereich (1d) eines dickwandigen Umfangsabschnitts (1b) gebildet ist.

5. Strahlungsthermometer nach Anspruch 3 oder 4, **dadurch gekennzeichnet**, daß der Umfangsabschnitt (1b) elastisch auf einem Hohlabschnitt (2) sitzt.

6. Strahlungsthermometer nach Anspruch 5, **dadurch gekennzeichnet**, daß Querschnitt und Elastizität des Umfangsabschnitts (1b) so bestimmt sind, daß sich ein Kanal von der Druckkammer (12) zum luftdichten Raum (4) sowie zwischen Umfangsabschnitt (1b) und Hohlabschnitt (2) bildet, wenn die äußere Wand der Druckkammer (12) eingedrückt wird und der Lufteinlaß (11) geschlossen ist.

7. Strahlungsthermometer nach Anspruch 5 oder 6, **gekennzeichnet durch** Abdichtmittel (13) zwischen dem Hohlabschnitt (2) und dem Körper (6) des Thermometers.

## Revendications

1. Un thermomètre à rayonnement comprenant un corps (6) dans lequel sont montés des moyens de détection de rayonnement (7) et un système optique (5), et un organe élastique à rayonnement infrarouge (1) à une extrémité en pointe du corps (6) qui présente en coupe une forme convexe vers la face d'un objet (3) à mesurer, caractérisé en ce que l'organe à rayonnement infrarouge comporte au moins une partie à film mince (1a) traversant un axe optique (P) du système optique (5) et en ce qu'une chambre étanche à l'air (4) est formée par ledit organe élastique (1) et le thermomètre, de telle façon que la pression interne à l'intérieur de la chambre étanche à l'air (4) soit supérieure à la pression de l'air libre.

2. Le thermomètre à rayonnement tel que revendiqué à la revendication 1, caractérisé par une chambre de pressurisation (12) comportant une admission d'air (11) pour engendrer à l'intérieur de ladite chambre étanche (4) une pression interne qui puisse être supérieure à la pression de l'air libre, ladite chambre de pressurisation (12) étant reliée à une partie périphérique (1d) dudit organe à rayonnement infrarouge (1).

3. Le thermomètre à rayonnement tel que revendiqué à la revendication 2, caractérisé en ce que la chambre de pressurisation (12) est constituée par une cavité sur la face intérieure d'une partie circonférentielle à paroi épaisse (1b).

4. Le thermomètre à rayonnement tel que revendiqué à la revendication 2, caractérisé en ce que la chambre de pressurisation (12) est constituée par une partie gonflée à paroi mince (1d) d'une partie circonférentielle à paroi épaisse (1b).

5. Le thermomètre à rayonnement tel que revendiqué à la revendication 3 ou 4, caractérisé en ce que la partie circonférentielle (1b) est montée élastiquement sur un capuchon (2).

6. Le thermomètre à rayonnement tel que revendiqué à la revendication 5, caractérisé en ce que la section transversale et l'élasticité de la partie circonférentielle (1b) sont déterminées de telle façon qu'un intervalle s'étendant de la chambre de pressurisation (12) jusqu'à la chambre étanche à l'air (4) soit établi entre la partie circonférentielle (1b) et le capuchon (2) lorsque l'on presse sur une paroi extérieure de la chambre de pressurisation (12) tout en maintenant fermée l'admission d'air (11).

7. Le thermomètre à rayonnement tel que revendiqué à la revendication 5 ou 6, caractérisé en ce que des moyens d'étanchéité (13) sont prévus entre le capuchon (2) et le corps (6) du thermomètre.
